# EUROPÄISCHE PATENTSCHRIFT

(11) **EP 4 347 255 B1**
(45) Veröffentlichungstag und Bekanntmachung des Hinweises auf die Patenterteilung: **16.04.2025**
(21) Anmeldenummer: 22730160.3
(22) Anmeldetag: 19.05.2022
(51) Int. Cl.: B32B 17/10

(54) **VERBUNDSCHEIBE MIT EINER ELEKTRISCH LEITFÄHIGEN BESCHICHTUNG UND MINDESTENS EINER SCHICHT UMFASSEND SELEKTIV ABSORBIERENDE NANOPARTIKEL**
COMPOSITE PANEL WITH AN ELECTRICALLY CONDUCTIVE COATING AND AT LEAST ONE LAYER COMPRISING SELECTIVELY ABSORBING NANOPARTICLES
VITRE COMPOSITE DOTÉE D'UN REVÊTEMENT ÉLECTRIQUEMENT CONDUCTEUR ET D'AU MOINS UNE COUCHE COMPRENANT DES NANOPARTICULES ABSORBANTES SÉLECTIVES

(30) Priorität: 31.05.2021 EP 21176790
(43) Veröffentlichungstag der Anmeldung: 10.04.2024
(73) Patentinhaber: Saint-Gobain Glass France, 92400 Courbevoie (FR)
(72) Erfinder: HAGEN, Jan, 53123 Bonn (DE); SCHALL, Günther, 52372 Kreuzau (DE)
(74) Vertreter: SGR Germany-Patents
(86) Internationale Anmeldenummer: PCT/EP2022/063630
(87) Internationale Veröffentlichungsnummer: WO 2022/253584

(56) Entgegenhaltungen:
- US-A1- 2010 220 388
- US-A1- 2015 202 846

## Beschreibung

Die Erfindung betrifft eine Verbundscheibe mit einer elektrisch leitfähigen Beschichtung und mindestens einer Schicht umfassend selektiv absorbierende Nanopartikel.

Verbundscheiben mit elektrisch leitfähigen Beschichtungen sind im Fahrzeugbereich hinlänglich bekannt, beispielsweise als Windschutzscheibe mit beheizbarer, transparenter Beschichtung. Die Beschichtung umfasst typischerweise mehrere Silberschichten, die alternierend mit dielektrischen Schichten aufgebracht sind, wodurch einerseits eine hohe elektrische Leitfähigkeit und andererseits eine ausreichende Transmission im sichtbaren Spektralbereich sichergestellt wird. Es sind auch komplexere elektrisch leitfähige Beschichtungen für Windschutzscheiben bekannt, die beispielsweise als IR-reflektierende Beschichtungen verwendet werden, um die Erwärmung des Fahrzeuginnenraums zu verringern und dadurch den thermischen Komfort zu verbessern. Die Beschichtungen können aber auch als beheizbare Beschichtungen verwendet werden, indem sie mit einer Spannungsquelle verbunden werden, so dass ein Strom durch die Beschichtung fließt. Geeignete Beschichtungen enthalten leifähige, metallische Schichten, insbesondere auf Basis von Silber. Da diese Schichten korrosionsanfällig sind, ist es üblich, sie auf die der Zwischenschicht zugewandten Oberfläche der Außenscheibe oder der Innenscheibe aufzubringen, so dass sie keinen Kontakt zur Atmosphäre haben. Silberhaltige transparente Beschichtungen sind beispielsweise bekannt aus WO03/024155, US2007/0082219A1, US2007/0020465A1, WO2013/104438 oder WO2013/104439.

Daneben sind auch sogenannte LowE-Beschichtungen bekannt, die beispielsweise eine funktionelle Schicht aus ITO enthalten, beispielsweise aus WO2013/131667. Solche Beschichtungen sind im Gegensatz zu silberbasierten Beschichtungen nicht korrosionsempfindlich und können daher auf einer externen Oberfläche der Verbundscheibe verwendet werden, insbesondere der innenraumseitigen Oberfläche der Innenscheibe.

US 2015/0202846 A1 offenbart eine PVB-Folie mit geringem Weichmacheranteil und elektrisch leitfähiger oder reflektierender Beschichtung.

In US 2010/0220388 A1 ist ein Laminat beschrieben, das eine Schicht umfasst, die Strahlung im Wellenlängenbereich von 200 nm bis 500 nm absorbiert.

Insbesondere im Automobilbereich werden Sonnenschutzbeschichtungen angestrebt, die nicht nur heizbar sind, sondern auch über eine geringe solare Gesamttransmission (TTS), eine geringe außenseitige Reflektion und neutrale oder blaue beziehungsweise grüne Reflektionsfarben verfügen. Insbesondere gelbe, rote und violette Reflektionsfarben werden als störend empfunden und sind zu vermeiden. Gute Sonnenschutzeigenschaften von Fahrzeugverglasungen tragen auch dazu bei, den Energieverbrauch der Klimaanlage zu senken und sind somit auch unter Umweltaspekten erstrebenswert. Bei Elektroautos bedeutet ein verringerter Energieverbrauch von Sekundärsystemen, wie Klimaanlage und Heizung, eine Steigerung der Reichweite. Eine geringe solare Gesamttransmission (TTS) geht in der Regel mit einer hohen äußeren Reflektivität der Beschichtung einher, jedoch ist in der Praxis ein möglichst geringer Betrag beider Größen wünschenswert. Darüber hinaus sind für Windschutzscheiben die gesetzlichen Vorgaben gemäß den in ECE-R 43, Anhang 3, § 9.1 festgelegten Verfahren zur Prüfung der Lichtdurchlässigkeit von Kraftfahrzeugscheiben einzuhalten, gemäß derer die Gesamttransmission TL mindestens 70% betragen muss. Dadurch wird eine geringe solare Gesamttransmission weiter erschwert. Diese Anforderungen an eine geringe solare Gesamttransmission, eine Beheizbarkeit der Beschichtung und eine ausreichende Lichtdurchlässigkeit führen häufig dazu, dass das Kriterium der optisch ansprechenden Reflektionsfarbe der Beschichtung nicht einzuhalten ist. Neben der endkundenseitig kaum akzeptablen rötlichen Reflektionsfarbe der Beschichtung wird auch die Reflektionsfarbe von an der Verbundscheibe reflektierten Bildern beeinflusst. So erscheint beispielsweise bei Verwendung der Verbundscheibe als Head-Up-Display ein rotverschobenes Geisterbild.

Es besteht daher Bedarf an Verbundscheiben mit elektrisch leitfähigen Beschichtungen mit einer neutralen Farbgebung, insbesondere einer neutralen außenseitigen Reflexionsfarbe. Der vorliegenden Erfindung liegt die Aufgabe zugrunde, eine solche verbesserte Verbundscheibe bereitzustellen.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe, umfasst eine Außenscheibe mit einer außenseitigen Oberfläche (Seite I) und einer innenraumseitigen Oberfläche (Seite II), eine Innenscheibe mit einer außenseitigen Oberfläche (Seite III) und einer innenraumseitigen Oberfläche (Seite IV) und eine thermoplastische Zwischenschicht, welche die innenraumseitige Oberfläche der Außenscheibe mit der außenseitigen Oberfläche der Innenscheibe verbindet, wobei die Verbundscheibe zwischen der Außenscheibe und der Innenscheibe mindestens eine elektrisch leitfähige Beschichtung und mindestens eine Schicht selektiv absorbierender Nanopartikel aufweist. Die elektrisch leitfähige Beschichtung und die Schicht selektiv absorbierender Nanopartikel sind flächig übereinander angeordnet, wobei die Schichtabfolge der beiden Elemente variieren kann und diese direkt oder indirekt benachbart angeordnet sein können. Flächig übereinander angeordnet bedeutet in diesem Sinne, dass die Projektion der Schicht selektiv absorbierender Nanopartikel in die Ebene der elektrisch leitfähigen Beschichtung zumindest teilweise deckungsgleich mit der elektrisch leitfähigen Beschichtung ist. Die Schicht selektiv absorbierender Nanopartikel weist eine Absorption innerhalb des Wellenlängenbereichs von 580 nm bis 750 nm auf. Die Schicht selektiv absorbierender Nanopartikel absorbiert elektromagnetische Strahlung einer oder mehrerer Wellenlängen innerhalb dieses Wellenlängenbereichs, der dem gelben beziehungsweise roten Bereich des sichtbaren Lichtspektrums entspricht. Von der elektrisch leitfähigen Beschichtung reflektiertes Licht, das nach Reflektion an der Beschichtung durch die Schicht selektiv reflektierender Nanopartikel verläuft, wird in seiner Farbgebung gefiltert. Die Schicht selektiv absorbierender Nanopartikel weist eine selektive Absorption im Wellenlängenbereich von 580 nm bis 750 nm auf, während die Absorption im restlichen Wellenlängenbereich des sichtbaren Lichtes nur in untergeordnetem Maße stattfindet. Nach Passieren der Schicht selektiv absorbierender Nanopartikel ist die Lichtintensität im gelben beziehungsweise roten Bereich stark abgeschwächt. Durch die Absorption im roten Bereich des sichtbaren Lichtspektrums wird demnach die Farbgebung der Verbundscheibe insgesamt ins blau-grüne verschoben. Die durch die elektrisch leitfähige Beschichtung hervorgerufene rötliche Reflektionsfarbe kann somit kompensiert werden. Es resultiert ein neutralerer Farbeindruck. Bläuliche oder grünliche Reflektionsfarben werden vom Endkunden und Fahrzeughersteller als angenehm empfunden und, im Gegensatz zu roten Farbtönen, akzeptiert. Die Erfindung ermöglicht es somit elektrisch leitfähige Beschichtungen vor allem hinsichtlich ihrer elektrischen Eigenschaften und solaren Gesamttransmission auszuwählen, wobei die Reflektionsfarbe der Beschichtung eine untergeordnete oder keine Rolle spielt.

Die Verbundscheibe ist dafür vorgesehen, in einer Fensteröffnung, insbesondere der Fensteröffnung eines Fahrzeugs, den Innenraum gegenüber der äußeren Umgebung abzutrennen. Mit Innenscheibe wird im Sinne der Erfindung die dem Innenraum (insbesondere Fahrzeuginnenraum) zugewandte Scheibe der Verbundscheibe bezeichnet. Mit Außenscheibe wird die der äußeren Umgebung zugewandte Scheibe bezeichnet. Die Verbundscheibe ist bevorzugt eine Fahrzeug-Windschutzscheibe (insbesondere die Windschutzscheibe eines Kraftfahrzeugs, beispielsweise eines Personen- oder Lastkraftwagens), oder bevorzugt eine Fahrzeug-Dachscheibe. Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die Zwischenschicht der Verbundscheibe ist durch zumindest eine Lage thermoplastischen Materials gebildet. Die Zwischenschicht kann aus dieser einen Lage thermoplastischen Materials bestehen und beispielsweise aus eine einzelnen Polymerfolie oder Gießharzschicht ausgebildet sein. Die Zwischenschicht kann aber auch mehrere Lagen thermoplastischen Materials umfassen und beispielsweise aus mehreren flächig übereinander angeordneten Polymerfolien ausgebildet sein. Besonders bevorzugt umfasst die Zwischenschicht eine oder mehrere thermoplastische Verbundfolien. Mehrere thermoplastische Verbundfolien werden insbesondere eingesetzt, sofern die thermoplastische Zwischenschicht Trägerfolien umfasst, die zwischen den thermoplastischen Verbundfolien eingelegt werden.

Die Verbundscheibe weist außerdem mindestens eine Schicht selektiv absorbierender Nanopartikel auf. Die mindestens eine Schicht selektiv absorbierender Nanopartikel kann außenseitig und/oder innenraumseitig der elektrisch leitfähigen Beschichtung angeordnet sein. Die außenseitige Anordnung ist dabei bevorzugt, weil auf diese Weise die außenseitig von der Fahrzeugumgebung aus sichtbare Reflektionsfarbe vorteilhaft beeinflusst werden kann. Mit der außenseitigen Anordnung ist gemeint, dass sich die Schicht selektiv absorbierender Nanopartikel zwischen der außenseitigen Oberfläche der Außenscheibe und der leitfähigen Beschichtung befindet. Bei der innenraumseitigen Anordnung befindet sich die Schicht selektiv absorbierender Nanopartikel zwischen der innenraumseitigen Oberfläche der Innenscheibe und der leitfähigen Beschichtung. Die mindestens eine Schicht selektiv absorbierender Nanopartikel überlappt bevorzugt die gesamte leitfähige Beschichtung in Durchsicht durch die Verbundscheibe.

Die mindestens eine Schicht selektiv absorbierender Nanopartikel ist bevorzugt durch eine thermoplastische Folie der Zwischenschicht ausgebildet, in die selektiv absorbierende Nanopartikel eingelagert sind. Alternativ dazu kann eine Schicht selektiv absorbierender Nanopartikel auf eine andere Schicht es Schichtstapels aufgetragen sein. Besonders bevorzugt ist die thermoplastische Zwischenschicht aus mindestens einer thermoplastischen Folie ausgebildet und selektiv absorbierende Nanopartikel sind in die mindestens eine thermoplastische Folie eingelagert, um aus der thermoplastischen Folie die Schicht selektiv absorbierender Nanopartikel auszubilden, wobei insbesondere in der mindestens einen thermoplastischen Folie mindestens 0,1 Gew.-% (Gewichtsprozent), bevorzugt mindestens 1 Gew.-% selektiv absorbierende Nanopartikel eingelagert sind. Es können beispielsweise zwischen 1 Gew.-% und 5 Gew.-% selektiv absorbierende Nanopartikel in mindestens eine thermoplastische Folie eingelagert sein.

Somit sind verschiedene Positionierungen der mindestens einen Schicht selektiv absorbierender Nanopartikel möglich:
- Auf einer Oberfläche einer der Scheiben, insbesondere auf der innenraumseitigen Oberfläche der Außenscheibe und/oder der außenseitigen Oberfläche der Innenscheibe.
- Auf einer Trägerfolie eingelagert in die Zwischenschicht. Die Trägerfolie kann beispielsweise aus Polyethylenterephthalat (PET) gebildet mit einer Dicke von etwa 50 µm und zwischen zwei Lagen thermoplastischen Materials angeordnet sein.
- Eingelagert in eine thermoplastische Verbundfolie der Zwischenschicht.

Die elektrisch leitfähige Beschichtung ist bevorzugt auf der innenraumseitigen Oberfläche der Außenscheibe oder der außenseitigen Oberfläche der Innenscheibe angeordnet. Alternativ kann die elektrisch leitfähige Beschichtung auf einer Trägerfolie angeordnet sein, die zwischen zwei thermoplastischen Verbundfolien der Zwischenschicht eingelegt ist. Die Trägerfolie kann beispielsweise aus Polyethylenterephthalat (PET) mit einer Dicke von etwa 50 µm gebildet sein.

In einer bevorzugten Ausführungsform ist die mindestens eine Schicht selektiv absorbierender Nanopartikel außenseitig der elektrisch leitfähigen Beschichtung angeordnet. Demnach ist der Abstand mindestens einer Schicht selektiv absorbierender Nanopartikel zur Außenscheibe geringer als der Abstand der elektrisch leitfähigen Beschichtung zur Außenscheibe. Auf die Verbundscheibe auftreffendes Umgebungslicht fällt somit auf die Außenscheibe der Verbundscheibe, durchtritt die mindestens eine Schicht selektiv absorbierender Nanopartikel, wird an der elektrisch leitfähigen Beschichtung teilweise reflektiert, wobei der reflektierte Lichtanteil wiederum die mindestens eine Schicht selektiv absorbierender Nanopartikel durchtritt, an der Außenscheibe der Verbundscheibe austritt und dort als Reflektionsfarbe wahrgenommen wird. Bei Durchtritt des Lichtes durch die Schicht selektiv absorbierender Nanopartikel wird ein Anteil des Lichtes im gelben beziehungsweise roten Bereich des Spektrums durch Absorption entfernt, so dass die außenseitige Reflektionsfarbe neutral bis grünlich oder bläulich erscheint.

In einer weiteren bevorzugten Ausführungsform ist zumindest eine Schicht selektiv absorbierender Nanopartikel innenseitig der elektrisch leitfähigen Beschichtung angeordnet. Dabei ist der Abstand der mindestens einen Schicht selektiv absorbierender Nanopartikel zur Innenscheibe geringer als der Abstand der elektrisch leitfähigen Beschichtung zur Innenscheibe. Auf die Verbundscheibe von Seiten des Fahrzeuginnenraums auftreffendes Licht fällt somit auf die Innenscheibe der Verbundscheibe, durchtritt die mindestens eine Schicht selektiv absorbierender Nanopartikel, wird an der elektrisch leitfähigen Beschichtung teilweise reflektiert, wobei der reflektierte Lichtanteil wiederum die mindestens eine Schicht selektiv absorbierender Nanopartikel durchtritt, an der Innenscheibe der Verbundscheibe austritt und dort als Reflektionsfarbe wahrgenommen wird. Auch in diesem Fall wird mittels Absorption des gelben beziehungsweise roten Lichtanteils durch die Schicht selektiv absorbierender Nanopartikel die innenseitige Reflektionsfarbe hin zu neutralen oder leicht bläulichen oder grünlichen Farbeindrücken verschoben.

In einer weiteren bevorzugten Ausführungsform weist die Verbundscheibe mindestens zwei Schichten selektiv absorbierender Nanopartikel auf, wobei die elektrisch leitfähige Beschichtung zwischen den Schichten selektiv absorbierender Nanopartikel angeordnet ist. Auf diese Weise kann sowohl die an der Außenseite der Verbundscheibe als auch die an der Innenseite der Verbundscheibe sichtbare Reflektionsfarbe hin zu einem ansprechenden Farbton verschoben werden.

Die elektrisch leitfähige Beschichtung und die mindestens eine Schicht selektiv absorbierender Nanopartikel können jeweils auf der innenraumseitigen Oberfläche (II) der Außenscheibe, auf der außenraumseitigen Oberfläche (III) der Innenscheibe und/oder einer in der thermoplastischen Zwischenschicht eingelegten Trägerfolie aufgebracht sein. Die Schicht selektiv absorbierender Nanopartikel kann darüber hinaus unmittelbar in der thermoplastischen Zwischenschicht ausgestaltet sein, indem ein Material einer thermoplastischen Verbundfolie der thermoplastischen Zwischenschicht selektiv absorbierende Nanopartikel aufweist.

Besonders bevorzugt ist die mindestens eine Schicht selektiv absorbierender Nanopartikel außenseitig der elektrisch leitfähigen Beschichtung angeordnet, wobei die elektrisch leitfähige Beschichtung auf der außenseitigen Oberfläche (III) der Innenscheibe angeordnet ist und die mindestens eine Schicht selektiv absorbierender Nanopartikel innerhalb der Zwischenschicht angeordnet ist. Die Schicht selektiv absorbierender Nanopartikel kann dabei auf einer in der Zwischenschicht eingelegten Trägerfolie angeordnet sein. Insbesondere sind die Nanopartikel jedoch unmittelbar im Material einer thermoplastischen Verbundfolie der Zwischenschicht eingebracht. Elektrisch leitfähige Beschichtungen auf Glassubstraten sind mit industriell anwendbaren Methoden, wie Magnetronsputtering, kostengünstig und in sehr guter Qualität umsetzbar. Wird die Schicht selektiv reflektierender Nanopartikel unmittelbar im Material der thermoplastischen Zwischenschicht integriert, so kann der bestehende Produktionsprozess unverändert weitergeführt werden, wobei lediglich eine andere Zwischenschicht bereitgestellt wird. Darüber hinaus ist die in dieser Ausführungsform erreichte ansprechende außenseitige Reflektionsfarbe ein entscheidendes Kriterium für Fahrzeughersteller und Endkunden.

In einer weiteren besonders bevorzugten Ausführungsform ist die mindestens eine Schicht selektiv absorbierender Nanopartikel innenraumseitig der elektrisch leitfähigen Beschichtung angeordnet, wobei die elektrisch leitfähige Beschichtung auf der innenrumseitigen Oberfläche (II) der Außenscheibe angeordnet ist und die mindestens eine Schicht selektiv absorbierender Nanopartikel innerhalb der Zwischenschicht angeordnet ist. Die Schicht selektiv absorbierender Nanopartikel kann auf einer in der Zwischenschicht eingelegten Trägerfolie angeordnet sein, insbesondere sind die Nanopartikel jedoch auch in diesem Fall unmittelbar im Material einer thermoplastischen Verbundfolie der Zwischenschicht eingebracht. Diese Ausführungsform ist bevorzugt, sofern vor allem die Farbe der innenraumseitigen Reflektion, die im Innenraum des Fahrzeugs sichtbar ist, verbessert werden soll. Insbesondere bei auf Reflektion basierenden Displayanwendungen, wie head-up Displays, ist dies vorteilhaft.

In einer weiteren möglichen Ausführungsform weist die Verbundscheibe eine elektrisch leitfähige Beschichtung zwischen mindestens zwei Schichten selektiv absorbierender Nanopartikel auf, wobei die elektrisch leitfähige Beschichtung auf einer Trägerfolie aufgebracht ist, die in der thermoplastischen Zwischenschicht eingelegt ist. Die mindestens zwei Schichten selektiv absorbierender Nanopartikel sind dabei jeweils auf der innenraumseitigen Oberfläche (II) der Außenscheibe und der außenseitigen Oberfläche der Innenscheibe (III) angeordnet. Besonders bevorzugt sind eine oder beide Schichten selektiv absorbierender Nanopartikel unmittelbar über die die Trägerfolie umgebenden thermoplastischen Verbundfolien der Zwischenschicht integriert, indem die Nanopartikel dem Material der Zwischenschicht beigemischt sind. Eine solche Ausführungsform ist von Vorteil, sofern die beidseitige Anpassung der Reflektionsfarbe gewünscht ist. Alternativ dazu könnten eine oder beide Schichten selektiv absorbierender Nanopartikel ebenfalls über Trägerfolien in den Schichtstapel eingebracht sein.

Die thermoplastische Zwischenschicht ist aus mindestens einer thermoplastischen Verbundfolie ausgebildet. Soll eine Trägerfolie in den Schichtstapel der Verbundscheibe integriert werden, so umfasst die Zwischenschicht zumindest zwei thermoplastische Verbundfolien, zwischen denen die Trägerfolie eingelegt ist. Die thermoplastischen Verbundfolien können auch aus mehreren einzelnen Verbundfolien zusammengelegt sein. Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der Zwischenschicht beträgt bevorzugt von 0,2 mm bis 2 mm, besonders bevorzugt von 0,3 mm bis 1 mm. Wird eine keilförmige Zwischenschicht eingesetzt, so wird die Dicke an der dünnsten Stelle bestimmt, typischerweise an der Unterkante der Verbundscheibe.

Bevorzugt ist die Schicht selektiv absorbierender Nanopartikel unmittelbar in der thermoplastischen Zwischenschicht selbst ausgestaltet. Dazu sind selektiv absorbierende Nanopartikel in mindestens eine thermoplastische Verbundfolie eingelagert, um aus der thermoplastischen Folie die Schicht selektiv absorbierender Nanopartikel auszubilden. Dies hat den Vorteil, dass einerseits keine zusätzlichen Trägerfolien benötigt werden und andererseits keine zusätzlichen Schritte zum Auftragen der Nanopartikel auf eine Scheibenoberfläche notwendig sind. Die thermoplastische Verbundfolie, die die Schicht selektiv absorbierender Nanopartikel umfasst kann ohne Veränderung des Produktionsablaufs in den Schichtstapel der Verbundscheibe eingelegt werden. Die Herstellung der Verbundfolie umfassend die Schicht selektiv absorbierender Nanopartikel erfolgt dabei im Vorfeld und beeinflusst den Produktionsprozess der Verbundscheibe nicht.

Die Schicht selektiv absorbierender Nanopartikel umfasst bevorzugt Nanopartikel basierend auf Halbleitermaterialien, besonders bevorzugt basierend auf Silizium (Si), Zinkselenid (ZnSe) und/oder Cadmiumtellurid (CeTe), und/oder basierend auf Perowskiten. Die Erfinder haben feststellt, dass diese Materialien eine ausreichende selektive Absorption bewirken. Insbesondere Perowskite haben sich diesbezüglich als besonders geeignet erwiesen. Insbesondere geeignet sind Nanopartikel basierend auf halogenhaltigen Cäsium-Blei-Perowskiten, beispielsweise CsPbl₃ oder CsPb(I/Br)₃. Der Begriff "Perowskite" beschreibt Verbindungen der allgemeinen Struktur ABX₃, wobei A und B Kationen sind, der Durchmesser von A größer ist als der von B, und X anionische Oxide (O²⁻) oder Halogene (F⁻, Br, I⁻) sind. Daneben existieren auch Perowskite mit einer gemischten Kationenstruktur vom Typ (AA')(BB')O₆, wobei die A- und A'-Kationen und die B- und B'-Kationen jeweils auf den Gitterplätzen A und B angeordnet sind.

Bevorzugt weist die Schicht selektiv absorbierender Nanopartikel eine Absorption im Wellenlängenbereich von 580 nm bis 700 nm, besonders bevorzugt im Wellenlängenbereich von 590 nm bis 690 nm, auf. Auf diese Weise können rote Farbtöne der Reflektionsfarbe besonders effektiv vermieden werden.

Die Schicht selektiv absorbierender Nanopartikel weist vorzugsweise innerhalb des selektiv absorbierenden Wellenlängenbereich eine Absorption von mindestens 20%, bevorzugt mindestens 30%, besonders bevorzugt mindestens 40% auf.

Die elektrisch leitfähige Beschichtung ist bevorzugt auf der Innenscheibe oder der Außenscheibe aufgebracht, also der zur Zwischenschicht hingewandten, außenseitigen Oberfläche der Innenscheibe oder der zur Zwischenschicht hingewandten, innenseitigen Oberfläche der Außenscheibe. Die Beschichtung kann alternativ innerhalb der Zwischenschicht angeordnet sein. Dazu ist die Beschichtung typischerweise auf einer Trägerfolie aufgebracht, beispielsweise aus Polyethylenterephthalat (PET) mit einer Dicke von etwa 50 µm, welche zwischen zwei Lagen thermoplastischen Materials angeordnet ist, beispielsweise zwischen zwei Polymerfolien. Bevorzugt sind mindestens 80% der Scheibenfläche mit der erfindungsgemäßen Beschichtung versehen. Insbesondere ist die Verbundscheibe vollflächig mit der Beschichtung versehen mit Ausnahme eines umlaufenden Randbereichs und optional lokaler Bereich, die als Kommunikations-, Sensor- oder Kamerafenster die Transmission von elektromagnetischer Strahlung durch die Verbundscheibe gewährleisten sollen und daher nicht mit der Beschichtung versehen sind. Der umlaufende unbeschichtete Randbereich weist beispielsweise eine Breite von bis zu 20 cm auf. Er verhindert den direkten Kontakt der Beschichtung zur umgebenden Atmosphäre, so dass die Beschichtung im Innern der Verbundscheibe vor Korrosion und Beschädigung geschützt ist.

Die elektrisch leitfähige Beschichtung ist insbesondere eine transparente, elektrisch leitfähige Beschichtung. Die leitfähige Beschichtung kann beispielsweise als IR-reflektierende Sonnenschutzbeschichtung vorgesehen sein, oder auch als heizbare Beschichtung, welche elektrisch kontaktiert ist und sich bei Stromdurchfluss erwärmt. In einer besonders bevorzugten Ausführungsform ist die Verbundscheibe eine Windschutzscheibe eines Kraftfahrzeugs, wobei die elektrisch leitfähige Beschichtung transparent ist. Unter einer transparenten Beschichtung wird eine Beschichtung verstanden, die eine mittlere Transmission im sichtbaren Spektralbereich von mindestens 70 %, bevorzugt mindestens 75 % aufweist, die also die Durchsicht durch die Scheibe nicht wesentlich einschränkt. Ist die Verbundscheibe beispielsweise als Dachverglasung eines Kraftfahrzeugs vorgesehen, so kann die Transmission der Beschichtung auch entsprechend geringer sein.

Die elektrisch leitfähige Beschichtung umfasst mindestens eine elektrisch leitfähige Schicht. Die leitfähige Schicht kann metallhaltig sein, insbesondere auf Basis von Silber, wie es für IR-reflektierende Sonnenschutzbeschichtungen und heizbare Beschichtungen üblich ist.

Die elektrisch leitfähige Beschichtung ist bevorzugt ein Schichtstapel oder eine Schichtenfolge, umfassend eine oder mehrere elektrisch leifähige, insbesondere metallhaltige Schichten, wobei jede elektrisch leitfähige Schicht jeweils zwischen zwei dielektrischen Schichten oder Schichtenfolge angeordnet ist. Die Beschichtung ist also ein Dünnschicht-Stapel mit n elektrisch leitfähigen Schichten und (n+1) dielektrischen Schichten oder Schichtenfolgen, wobei n eine natürliche Zahl und wobei auf eine untere dielektrische Schicht oder Schichtenfolge jeweils im Wechsel eine leitfähige Schicht und eine dielektrische Schicht oder Schichtenfolge folgt. Solche Beschichtungen sind als Sonnenschutzbeschichtungen und heizbare Beschichtungen bekannt, wobei die elektrisch leitfähigen Schichten typischerweise auf Basis von Silber ausgebildet sind. Die leitfähige Beschichtung umfasst bevorzugt mindestens zwei elektrisch leitfähige Schichten, besonders bevorzugt mindestens drei elektrisch leitfähige Schichten, ganz besonders bevorzugt mindestens vier elektrisch leitfähige Schichten. Je höher die Anzahl der leitfähigen Schichten ist, desto besser ist die Beschichtung hinsichtlich eines gewünschten Transmissionsgrads, der Farbgebung oder eines gewünschten Flächenwiderstands optimierbar.

Durch die funktionellen, elektrisch leitfähigen Schichten wird die elektrische Leitfähigkeit der Beschichtung bewirkt. Durch die Aufteilung des gesamten leitenden Materials auf mehrere voneinander getrennte Schichten können diese jeweils dünner ausgestaltet werden, wodurch die Transparenz der Beschichtung erhöht wird. Jede elektrisch leitfähige Schicht enthält bevorzugt zumindest ein Metall oder eine Metalllegierung, beispielsweise Silber, Aluminium, Kupfer oder Gold, und ist besonders bevorzugt auf Basis des Metalls oder der Metalllegierung ausgebildet, das heißt besteht im Wesentlichen aus dem Metall oder der Metalllegierung abgesehen von etwaigen Dotierungen oder Verunreinigungen. Bevorzugt kommen Silber oder eine silberhaltige Legierung zum Einsatz. In einer vorteilhaften Ausgestaltung enthält die elektrisch leitfähige Schicht mindestens 90 Gew. % Silber, bevorzugt mindestens 99 Gew. % Silber, besonders bevorzugt mindestens 99,9 Gew. % Silber.

Die leitfähige Beschichtung enthält in einer besonders bevorzugten Ausgestaltung mindestens drei elektrisch leitfähige Schichten, insbesondere auf Basis von Silber. Solche Beschichtungen führen häufig zu einer roten Reflexionsfarbe, so dass die Erfindung ihre Vorteile hier in besonderem Maße entfaltet.

Zwischen den elektrisch leitfähigen Schichten sowie unterhalb der untersten leitfähigen Schicht und oberhalb der obersten leitfähigen Schicht sind erfindungsgemäß dielektrische Schichten oder Schichtenfolgen angeordnet. Jede dielektrische Schicht oder Schichtenfolge weist zumindest eine Entspiegelungsschicht auf. Die Entspiegelungsschichten senken die Reflexion von sichtbarem Licht und erhöhen somit die Transparenz der beschichteten Scheibe. Die Entspiegelungsschichten enthalten beispielsweise Siliziumnitrid (SiN), Silizium-Metall-Mischnitride wie Siliziumzirkoniumnitrid (SiZrN), Aluminiumnitrid (AIN) oder Zinnoxid (SnO₂). Die Entspiegelungsschichten können darüber hinaus Dotierungen aufweisen.

Die Entspiegelungsschichten können wiederum in mindestens zwei Teilschichten unterteilt sein, insbesondere in eine dielektrische Schicht mit einem Brechungsindex kleiner 2,1 und eine optisch hochbrechende Schicht mit einem Brechungsindex größer oder gleich 2,1. Bevorzugt ist zumindest eine zwischen zwei elektrisch leitfähigen Schichten angeordnete Entspiegelungsschicht derart unterteilt, besonders bevorzugt jede zwischen zwei elektrisch leitfähigen Schichten angeordnete Entspiegelungsschicht. Die Unterteilung der Entspiegelungsschicht führt zu einem geringeren Flächenwiderstand der elektrisch leitfähigen Beschichtung bei gleichzeitig hoher Transmission und hoher Farbneutralität. Die Reihenfolge der beiden Teilschichten kann grundsätzlich beliebig gewählt werden, wobei die optisch hochbrechende Schicht bevorzugt oberhalb der dielektrischen Schicht angeordnet ist, was im Hinblick auf den Flächenwiderstand besonders vorteilhaft ist. Die Dicke der optisch hochbrechenden Schicht beträgt bevorzugt von 10 % bis 99 %, besonders bevorzugt von 25 % bis 75 % der Gesamtdicke der Entspiegelungsschicht.

Die optisch hochbrechende Schicht mit einem Brechungsindex größer oder gleich 2,1 enthält beispielsweise ein Silizium-Metall-Mischnitrid, beispielsweise Silizium-Zirkonium-Mischnitrid (SiZrN). Das ist besonders vorteilhaft im Hinblick auf den Flächenwiderstand der elektrisch leitfähigen Beschichtung. Das Silizium-Zirkonium-Mischnitrid weist bevorzugt Dotierungen auf. Die Schicht eines optisch hochbrechenden Materials kann beispielsweise ein Aluminium-dotiertes Silizium-Zirkonium-Mischnitrid enthalten.

Die dielektrische Schicht mit einem Brechungsindex kleiner 2,1 weist bevorzugt einen Brechungsindex n zwischen 1,6 und 2,1 auf, besonders bevorzugt zwischen 1,9 und 2,1. Die dielektrische Schicht enthält bevorzugt zumindest ein Oxid und/oder ein Nitrid, besonders bevorzugt Siliziumnitrid.

In einer vorteilhaften Ausgestaltung weist eine oder weisen mehrere dielektrische Schichtenfolgen eine erste Anpassungsschicht auf, bevorzugt jede dielektrische Schichtenfolge, die unterhalb einer elektrisch leitfähigen Schicht angeordnet ist. Die erste Anpassungsschicht ist bevorzugt oberhalb der Entspiegelungsschicht angeordnet.

In einer vorteilhaften Ausgestaltung weist eine oder weisen mehrere dielektrische Schichtenfolgen eine Glättungsschicht auf, bevorzugt jede dielektrische Schichtenfolge, die zwischen zwei elektrisch leitfähigen Schichten angeordnet ist. Die Glättungsschicht ist unterhalb einer der ersten Anpassungsschichten angeordnet, bevorzugt zwischen der Entspiegelungsschicht und der ersten Anpassungsschicht. Die Glättungsschicht steht besonders bevorzugt in direktem Kontakt zur ersten Anpassungsschicht. Die Glättungsschicht bewirkt eine Optimierung, insbesondere Glättung der Oberfläche für eine anschließend oberhalb aufgebrachte elektrisch leitfähige Schicht. Eine auf eine glattere Oberfläche abgeschiedene elektrisch leitfähige Schicht weist einen höheren Transmissionsgrad bei einem gleichzeitig niedrigeren Flächenwiderstand auf. Die Glättungsschicht weist bevorzugt einen Brechungsindex von kleiner als 2,2 auf.

Die Glättungsschicht enthält bevorzugt zumindest ein nichtkristallines Oxid. Das Oxid kann amorph oder teilamorph (und damit teilkristallin) sein, ist aber nicht vollständig kristallin. Die nichtkristalline Glättungsschicht weist eine geringe Rauheit auf und bildet somit eine vorteilhaft glatte Oberfläche für die oberhalb der Glättungsschicht aufzubringenden Schichten. Die nichtkristalline Glättungsschicht bewirkt weiter eine verbesserte Oberflächenstruktur der direkt oberhalb der Glättungsschicht abgeschiedenen Schicht, welche bevorzugt die erste Anpassungsschicht ist. Die Glättungsschicht kann beispielsweise zumindest ein Oxid eines oder mehrerer der Elemente Zinn, Silizium, Titan, Zirkonium, Hafnium, Zink, Gallium und Indium enthalten. Die Glättungsschicht enthält besonders bevorzugt ein nichtkristallines Mischoxid. Die Glättungsschicht enthält ganz besonders bevorzugt ein Zinn-Zink-Mischoxid (ZnSnO). Das Mischoxid kann Dotierungen aufweisen. Die Glättungsschicht kann beispielsweise ein Antimon-dotiertes Zinn-Zink-Mischoxid enthalten. Das Mischoxid weist bevorzugt einen unterstöchiometrischen Sauerstoffgehalt auf.

In einer vorteilhaften Ausgestaltung weist eine oder weisen mehrere dielektrische Schichtenfolgen eine zweite Anpassungsschicht auf, bevorzugt jede dielektrische Schichtenfolge, die oberhalb einer elektrisch leitfähigen Schicht angeordnet ist. Die zweite Anpassungsschicht ist bevorzugt unterhalb der Entspiegelungsschicht angeordnet.

Die ersten und die zweiten Anpassungsschichten bewirken eine Verbesserung des Flächenwiderstands der Beschichtung. Die erste Anpassungsschicht und/oder die zweite Anpassungsschicht enthält bevorzugt Zinkoxid ZnO_{1-δ} mit 0 ≤ δ ≤ 0,01. Die erste Anpassungsschicht und/oder die zweite Anpassungsschicht enthält weiter bevorzugt Dotierungen. Die erste Anpassungsschicht und/oder die zweite Anpassungsschicht kann beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden.

In einer vorteilhaften Ausgestaltung umfasst die elektrisch leitfähige Beschichtung eine oder mehrere Blockerschichten. Bevorzugt ist mindestens einer, besonders bevorzugt jeder elektrisch leitfähigen Schicht mindestens eine Blockerschicht zugeordnet. Die Blockerschicht steht in direktem Kontakt zur elektrisch leitfähigen Schicht und ist unmittelbar oberhalb oder unmittelbar unterhalb der elektrisch leitfähigen Schicht angeordnet. Zwischen der elektrisch leitfähigen Schicht und der Blockerschicht ist also keine weitere Schicht angeordnet. Es kann auch jeweils eine Blockerschicht unmittelbar oberhalb und unmittelbar unterhalb einer leitfähigen Schicht angeordnet sein. Die Blockerschicht enthält bevorzugt Niob, Titan, Nickel, Chrom und / oder Legierungen davon, besonders bevorzugt Nickel-Chrom-Legierungen. Eine Blockerschicht unmittelbar unterhalb der elektrisch leitfähigen Schicht dient insbesondere zur Stabilisierung der elektrisch leitfähigen Schicht während einer Temperaturbehandlung und verbessert die optische Qualität der elektrisch leitfähigen Beschichtung. Eine Blockerschicht unmittelbar oberhalb der elektrisch leitfähigen Schicht verhindert den Kontakt der empfindlichen elektrisch leitfähigen Schicht mit der oxidierenden reaktiven Atmosphäre während der Abscheidung der folgenden Schicht durch reaktive Kathodenzerstäubung, beispielsweise der zweiten Anpassungsschicht.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht. Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird. Die angegebenen Werte für Brechungsindizes sind bei einer Wellenlänge von 550 nm gemessen. Ist eine Schicht auf Basis eines Materials ausgebildet, so besteht die Schicht mehrheitlich aus diesem Material neben etwaigen Verunreinigungen oder Dotierungen.

Ist die elektrisch leitfähige Beschichtung als Heizbeschichtung vorgesehen, so wird diese mit einer externen Spannungsquelle auf an sich bekannte Art elektrisch verbunden, wobei durch Anlegen einer Spannung die Erwärmung der Beschichtung stattfindet. Die elektrische Kontaktierung ist durch geeignete Verbindungskabel, beispielsweise Folienleiter realisiert, welche bevorzugt über sogenannte Sammelleiter (bus bars), beispielsweise Streifen eines elektrisch leitfähigen Materials oder elektrisch leitfähige Aufdrucke, mit der elektrisch leitfähigen Beschichtung verbunden sind.

Bevorzugt sind mindestens zwei Sammelleiter auf der elektrisch leitfähigen Beschichtung angebracht und elektrisch leitfähig mit dieser verbunden. Diese mindestens zwei Sammelleiter sind vorzugsweise entlang einander gegenüberliegenden Kanten der Verbundscheibe angebracht und können zur Beheizung der Scheibe mit entgegengesetzten Polen einer Spannungsquelle elektrisch leitfähig verbunden werden. Der Beschichtungsbereich zwischen den Sammelleitern ist dabei elektrisch beheizbar. In einer möglichen Ausführungsform der Erfindung sind drei Sammelleiter aufgebracht, wobei je ein Sammelleiter parallel zu den im Einbauzustand der Verbundscheibe als Windschutzscheibe eines Kraftfahrzeugs horizontalen Scheibenkanten verläuft und der dritte Sammelleiter von der Dachkante ausgehend in Richtung der Scheibenmitte ragt. Der erste Sammelleiter befindet sich dabei benachbart zur Dachkante, während der zweite Sammelleiter benachbart zur Motorkante liegt und beide Sammelleiter parallel zu diesen horizontalen Seitenkanten verlaufen. In einer besonders bevorzugten Ausführungsform sind ein oder mehrere Sammelleiter in ihrer Formgebung an etwaige entschichtete Bereiche für Sensorfenster angepasst, die der Anbringung von Sensoren dienen. Die Sammelleiter weisen eine Dicke von 5 µm bis 20 µm, bevorzugt 8 µm bis 15 µm auf. Die Breite der Sammelleiter beträgt 0,5 mm bis 30 mm, bevorzugt 1 mm bis 20 mm.

Im Randbereich der Verbundscheibe ist bevorzugt eine opake Abdeckschicht, beispielsweise in Form eines Siebdrucks aufgebracht, so dass dieser Siebdruck das Sichtfeld der Scheibe umschreibt bzw. dessen äußeren Rand bildet. Eventuell im Randbereich der Verbundscheibe angeordnete Sammelleiter und elektrische Leiter sowie ein gegebenenfalls vorgesehener beschichtungsfreier Randbereich sind bevorzugt von diesem Abdeckdruck verdeckt und werden so optisch kaschiert. Der opake Siebdruck ist beispielsweise an der außenseitigen Oberfläche (Seite III) der Innenscheibe und/oder an der innenraumseitigen Oberfläche (Seite II) der Außenscheibe angebracht. Bevorzugt fehlt die elektrisch leitfähige Beschichtung bevorzugt entlang eines umlaufenden Streifens entlang der umlaufenden Kante der Verbundscheibe. Dieser Bereich ohne Beschichtung wird von dem opaken Abdeckdruck kaschiert. Dadurch weist die Verbundscheibe ein optisch ansprechendes Erscheinungsbild auf.

In einer möglichen Ausführungsform wird die Verbundscheibe als Windschutzscheibe umfassend eine Projektionsfläche für ein head-up-display (HUD) verwendet. Dabei ist im Fahrzeuginnenraum ein HUD-Projektor angeordnet, der von Seiten der innenraumseitigen Oberfläche der Innenscheibe ein Bild auf die Verbundscheibe projiziert. HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt. Dabei tritt das Problem auf, dass das Projektorbild an beiden externen Oberflächen der Windschutzscheibe reflektiert wird. Eine weitere Reflektion tritt an der elektrisch leitfähigen Beschichtung auf. Dadurch treten neben dem gewünschten Hauptbild auch ein leicht versetzte Nebenbild auf, die sogenannten Geisterbilder ("Ghost"). Das Problem wird üblicherweise dadurch gemindert, dass die Scheibenoberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt. In einer bevorzugten Ausführungsform der Verbundscheibe umfasst dies Zwischenschicht mindestens eine keilförmige thermoplastische Verbundfolie.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,7 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch das Verbundglas beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn es als Scheibe für Busse, Züge oder Traktoren vorgesehen ist.

Die Verbundscheibe kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die Schicht selektiv absorbierender Nanopartikel kann beispielsweise in Form einer Lösung umfassend selektiv absorbierende Nanopartikel auf eine Scheibenoberfläche, Trägerfolie oder thermoplastische Verbundfolie aufgebracht werden, um die Schicht selektiv absorbierender Nanopartikel zu bilden. Bevorzugt werden selektiv absorbierende Nanopartikel unmittelbar in das thermoplastische Ausgangsmaterial bei der Extrusion der thermoplastischen Verbundfolie eingebracht, so dass die Schicht selektiv absorbierender Nanopartikel unmittelbar in der thermoplastischen Verbundfolie ausgestaltet ist.

Die elektrisch leitfähige Beschichtung wird bevorzugt durch physikalische Gasphasenabscheidung (PVD) auf das Substrat aufgebracht, besonders bevorzugt durch Kathodenzerstäubung ("Sputtern"), ganz besonders bevorzugt durch magnetfeldunterstütze Kathodenzerstäubung. Die Beschichtungen werden bevorzugt vor der Lamination auf die Scheiben aufgebracht. Statt die elektrisch leitfähige Beschichtung auf eine Scheibenoberfläche aufzubringen, kann sie grundsätzlich auch auf einer Trägerfolie bereitgestellt werden, die in der Zwischenschicht angeordnet wird.

Soll die Verbundscheibe gebogen sein, so werden die Außenscheibe und die Innenscheibe bevorzugt vor der Lamination und bevorzugt nach etwaiger Beschichtungsprozesse einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

Die Erfindung umfasst des Weiteren die Verwendung der Verbundscheibe als Windschutzscheibe, Heckscheibe, Seitenscheibe und/oder Dachscheibe, besonders bevorzugt als Windschutzscheibe eines Kraftfahrzeugs.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Ausgestaltung der erfindungsgemäßen Verbundscheibe umfassend eine elektrisch leitfähige Beschichtung auf der außenseitigen Oberfläche der Innenscheibe und eine Schicht selektiv absorbierender Nanopartikel in der thermoplastischen Verbundfolie,
- Fig. 2a: ein Reflektionsspektrum einer erfindungsgemäßen Verbundscheibe gemäß Fig. 1 im Vergleich zu einem Reflektionsspektrum einer nicht erfindungsgemäßen Verbundscheibe gemessen jeweils unter 8°,
- Fig. 2b: ein Reflektionsspektrum einer erfindungsgemäßen Verbundscheibe gemäß Fig. 1 im Vergleich zu einem Reflektionsspektrum einer nicht erfindungsgemäßen Verbundscheibe gemessen jeweils unter 60°,
- Fig. 3: eine weitere Ausgestaltung einer erfindungsgemäßen Verbundscheibe umfassend eine elektrisch leitfähige Beschichtung auf der innenraumseitigen Oberfläche der Außenscheibe und eine Schicht selektiv absorbierender Nanopartikel in der thermoplastischen Verbundfolie.

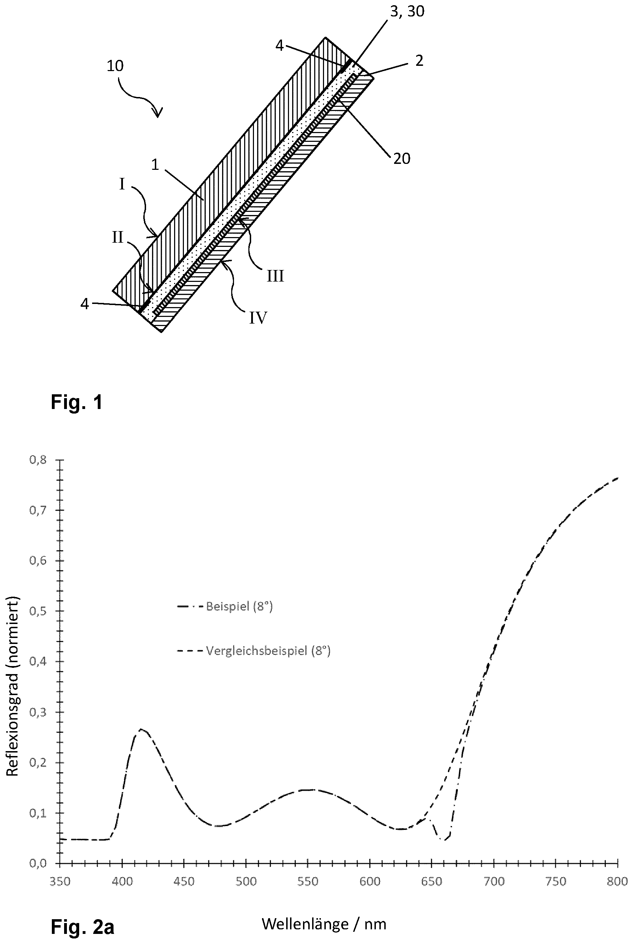

Figur 1 zeigt einen Querschnitt einer Ausgestaltung einer erfindungsgemäßen Verbundscheibe 10, die als Windschutzscheibe eines Personenkraftwagens vorgesehen ist. Die Verbundscheibe 10 ist aufgebaut aus einer Außenscheibe 1 und einer Innenscheibe 2, die über eine thermoplastische Zwischenschicht 3 miteinander verbunden sind. Die Außenscheibe 1 ist in Einbaulage der äußeren Umgebung zugewandt, die Innenscheibe 2 dem Fahrzeuginnenraum. Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist.

Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm. Die thermoplastische Zwischenschicht 3 ist aus einer einzigen thermoplastischen Verbundfolie ausgebildet, beispielsweise aus einer PVB-Folie mit einer Dicke von 0,76 mm.

Die Verbundscheibe 10 umfasst außerdem eine elektrisch leitfähige Beschichtung 20, die auf der außenseitigen Oberfläche III der Innenscheibe 2 aufgebracht ist und als beheizbare Beschichtung vorgesehen ist. Die elektrisch leitfähige Beschichtung 20 weist Sammelleiter und elektrische Zuleitungen zur elektrischen Kontaktierung der Beschichtung 20 mit einer Spannungsquelle auf (nicht gezeigt).

Die thermoplastische Zwischenschicht 3 umfasst eine Schicht selektiv absorbierender Nanopartikel 30 in dem Sinne, dass die Nanopartikel unmittelbar in das Material der thermoplastischen Verbundfolie eingebracht sind. Als selektiv absorbierende Nanopartikel werden Nanopartikel basierend auf CsPBI₃ eingesetzt, die eine selektive Absorption von Licht im Wellenlängenbereich von 610 nm bis 700 nm zeigen. Die Schicht selektiv absorbierender Nanopartikel 30 absorbiert somit im roten Bereich des sichtbaren Lichtspektrums. Dadurch wird der Rotstich, der durch die leitfähige Beschichtung 20 hervorgerufen wird, kompensiert. Die außenseitige Reflexionsfarbe wird ins Blaue verschoben, wodurch ein angenehmerer Farbeindruck entsteht.

Tabelle 1 zeigt einen beispielhaften Aufbau einer elektrisch leitfähigen Beschichtung 20 unter Angabe der Materialien und Schichtdicken. Die Beschichtung 20 ist auf der Innenscheibe 2 aufgebracht, wobei die Schichtenabfolge der in Tabelle 1 gezeigten entspricht. Die elektrisch leitfähige Beschichtung enthält drei elektrisch leitfähige Schichten 21.1, 21.2, 21.3. Jede elektrisch leitfähige Schicht 21 ist jeweils zwischen zwei von insgesamt vier Entspiegelungsschichten 22.1, 22.2, 22.3, 22.4 angeordnet. Die Entspiegelungsschichten 22.3, 22.4, sind jeweils unterteilt in eine dielektrische Schicht 22a.3, 22a.4 und eine optisch hochbrechende Schicht 22b.3, 22b.4. Die Beschichtung 20 enthält außerdem drei Glättungsschichten 23.1, 23.2, 23.3, drei erste Anpassungsschichten 24.1, 24.2, 24.3, drei zweite Anpassungsschichten 25.2, 25.3, 25.4 und drei Blockerschichten 26.1, 26.2, 26.3.

**Tabelle 1**

| | Bezugszeichen | | Schichtdicke |
|---|---|---|---|
| SiZrN | 22b.4 | 22.4 | 9,6 nm |
| Si₃N₄ | 22a.4 | | 9,9 nm |
| ZnO | 25.4 | | 13,0 nm |
| NiCr | 26.3 | | 0,2 nm |
| **Ag** | 21.3 | | 9,0 nm |
| ZnO | 24.3 | | 14,0 nm |
| ZnSnO | 23.3 | | 7,0 nm |
| SiZrN | 22b.3 | 22.3 | 21,3 nm |
| Si₃N4 | 22a.3 | | 25,8 nm |
| ZnO | 25.3 | | 10,0 nm |
| NiCr | 26.2 | | 0,3 nm |
| **Ag** | 21.2 | | 9,5 nm |
| ZnO | 24.2 | | 9,0 nm |
| ZnSnO | 23.2 | | 8,0 nm |
| SiZrN | 22.2 | | 42,5 nm |
| ZnO | 25.2 | | 12,0 nm |
| NiCr | 26.1 | 0,2 nm | |
| **Ag** | 21.1 | 9,5 nm | |
| ZnO | 24.1 | 13,0 nm | |
| ZnSnO | 23.1 | 7,0 nm | |
| SiZrN | 22.1 | 10,9 nm | |
| Glas | 2 | 1,6 mm | |

### Beispiel

Es wurde eine erfindungsgemäße Verbundscheiben 10 gemäß Figur 1 herstellt, wobei die elektrisch leitfähige Beschichtung 20 gemäß Tabelle 1 ausgebildet war. Eine nicht erfindungsgemäße Verbundscheibe als Vergleichsbeispiel wurde ebenso ausgebildet, mit dem Unterschied, dass im Vergleichsbeispiel auf eine Schicht selektiv absorbierender Nanopartikel 30 verzichtet wurde. Die Beobachtungen der Reflexionsfarbe (gemessen unter einem Winkel von 8° beziehungsweise 60°) sind in Tabelle 2 zusammengefasst. Es sind die Farbwerte a* und b* im L*a*b*-Farbraum angegeben (Lichtquelle D65), gefolgt von der Angabe des Beobachtungswinkels.

**Tabelle 2**

| | TL / % | a* (80) | b* (8°) | a* (60°) | b* (60°) |
|---|---|---|---|---|---|
| Vergleichsbeispiel | 72,2 | +0,5 | -5,1 | -1,0 | +5,5 |
| Beispiel | 71,2 | -0,7 | -5,4 | -3,9 | +4,8 |

Es ist zu erkennen, dass die a*-Werte durch Einsatz der Schicht selektiv absorbierender Nanopartikel verringert werden, während die b*-Werte ebenfalls geringfügig verringert werden. Insbesondere unter einem Beobachtungswinkel von 8° ist ein Vorzeichenwechsel des a*-Wertes zu beobachten, wobei die Reflektionsfarbe von einem unerwünschten rotblauen Farbton hin zu grün-blau verschoben wird. Die resultierende Farbe ist somit neutraler und für den Betrachter angenehmer. Die Gesamttransmission (Lichtquelle A) liegt in beiden Fällen über 70%, so dass die Scheiben als Windschutzscheiben geeignet sind.

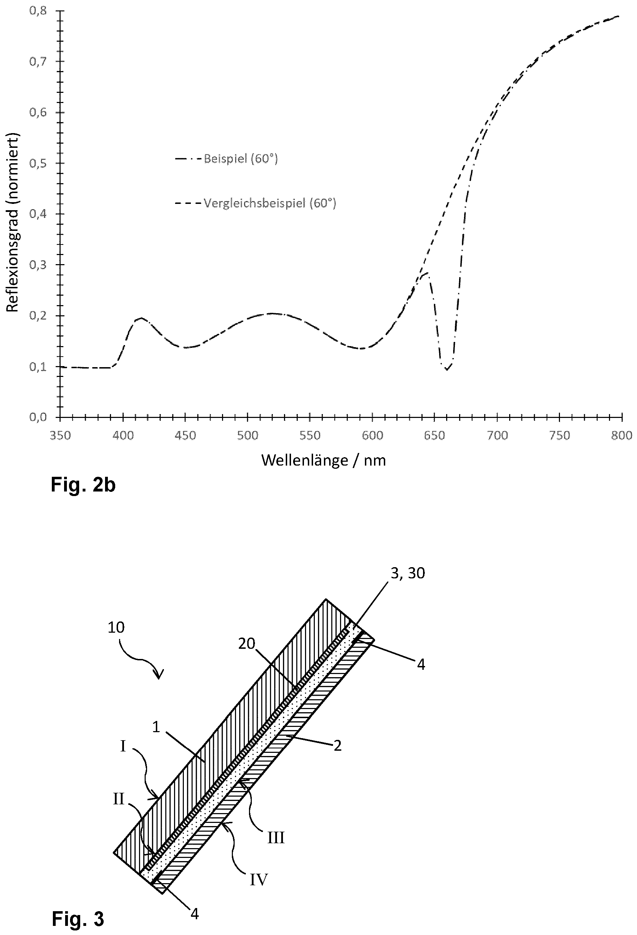

Figuren 2a und 2b zeigen Reflexionsspektren der Verbundscheibe 10 gemäß Figur 1 mit einer Beschichtung 20 gemäß Tabelle 1 (Beispiel) im Vergleich zu der Verbundscheibe des Vergleichsbeispiels (ohne Schicht selektiv absorbierender Nanopartikel). In Figur 2a sind die jeweils unter einem Beobachtungswinkel von 8° gemessenen Reflektionsspektren gezeigt, während die Spektren der Figur 2b einen Beobachtungswinkel von 60° aufweisen. Die Reflektionsspektren der Verbundscheiben gemäß Beispiel und gemäß Vergleichsbeispiel zeigen jeweils im Wellenlängenbereich von 640 nm bis 690 nm eine starke Abweichung zueinander, wobei die erfindungsgemäße Verbundscheibe gemäß Beispiel einen vorteilhaft verringerten Reflektionsgrad in diesem roten Bereich des Spektrums aufweist. Die Verbundscheibe gemäß erfindungsgemäßem Beispiel zeigt somit sowohl unter einem Beobachtungswinkel von 8° als auch unter einem Beobachtungswinkel von 60° eine wesentlich verbesserte Reflektionsfarbe im Vergleich zum Vergleichsbeispiel, wobei eine Farbänderung in Richtung grün-blau erfolgt.

Figur 3 zeigt eine weitere Ausgestaltung der erfindungsgemäßen Verbundscheibe 10, die im Wesentlichen der Ausgestaltung der Figur 1 entspricht, wobei im Unterschied dazu die elektrisch leitfähige Beschichtung 20 auf der innenraumseitigen Oberfläche (II) der Außenscheibe 1 aufgebracht ist. Diese Ausführungsform ist insbesondere bevorzugt um eine ansprechende Reflektionsfarbe eines seitens der innenraumseitigen Oberfläche (IV) auf die Verbundscheibe 10 projizierten HUD-Bildes zu erreichen. Wird die Verbundscheibe 10 der Figur 3 als HUD-Scheibe verwendet, so ist die thermoplastische Zwischenschicht 3 umfassend die Schicht selektiv absorbierender Nanopartikel 30 bevorzugt als Keilfolie ausgeführt.

### Bezugszeichenliste:

(10) Verbundscheibe
(1) Außenscheibe
(2) Innenscheibe
(3) thermoplastische Zwischenschicht
(4) opaker Abdeckdruck
(20) elektrisch leitfähige Beschichtung
(21.1), (21.2), (21.3), (21.4) elektrisch leitfähige Schichten
(22.1), (22.2), (22.3), (22.4) Entspiegelungsschichten
(22a.3), (22a.4) dielektrische Schichten
(22b.3), (22b.4) optisch hochbrechende Schichten
(23.1), (23.2), (23.3) Glättungsschichten
(24.1), (24.2), (24.3) erste Anpassungsschichten
(25.2), (25.3), (25.4) zweite Anpassungsschichten
(26.1), (26.2), (26.3) Blockerschichten
(30) Schicht selektiv absorbierender Nanopartikel
(I) außenseitige, von der Zwischenschicht 3 abgewandte Oberfläche der Außenscheibe 1
(II) innenraumseitige, zur Zwischenschicht 3 hingewandte Oberfläche der Außenscheibe 1
(III) außenseitige, zur Zwischenschicht 3 hingewandte Oberfläche der Innenscheibe 2
(IV) innenraumseitige, von der Zwischenschicht 3 abgewandte Oberfläche der Innenscheibe 2

## Patentansprüche

1. Verbundscheibe (10) mit elektrisch leitfähiger Beschichtung (20) mindestens umfassend eine Außenscheibe (1) mit einer außenseitigen Oberfläche (I) und einer innenraumseitigen Oberfläche (II) und eine Innenscheibe (2) mit einer außenseitigen Oberfläche (III) und einer innenraumseitigen Oberfläche (IV), wobei die innenraumseitige Oberfläche (II) der Außenscheibe (1) und die außenseitige Oberfläche (III) der Innenscheibe (2) über eine thermoplastische Zwischenschicht (3) miteinander verbunden sind, und wobei zwischen der innenraumseitigen Oberfläche (II) der Außenscheibe (1) und der außenseitigen Oberfläche (III) der Innenscheibe (2) flächig übereinander zumindest
- die elektrisch leitfähige Beschichtung (20) und
- mindestens eine Schicht selektiv absorbierender Nanopartikel (30) mit einer Absorption innerhalb des Wellenlängenbereichs von 580 nm bis 750 nm,
angeordnet sind.

2. Verbundscheibe (10) nach Anspruch 1, wobei mindestens eine Schicht selektiv absorbierender Nanopartikel (30) außenseitig der elektrisch leitfähigen Beschichtung (20) angeordnet ist.

3. Verbundscheibe (10) nach Anspruch 1 oder 2, wobei mindestens eine Schicht selektiv absorbierender Nanopartikel (30) innenseitig der elektrisch leitfähigen Beschichtung (20) angeordnet ist.

4. Verbundscheibe (10) nach Anspruch 2, wobei die elektrisch leitfähige Beschichtung (20) auf der außenseitigen Oberfläche (III) der Innenscheibe (2) angeordnet ist und die mindestens eine Schicht selektiv absorbierender Nanopartikel (30) innerhalb der Zwischenschicht (3) angeordnet ist.

5. Verbundscheibe (10) nach Anspruch 3, wobei die elektrisch leitfähige Beschichtung (20) auf der innenraumseitigen Oberfläche (II) der Außenscheibe (1) angeordnet ist und die mindestens eine Schicht selektiv absorbierender Nanopartikel (30) innerhalb der Zwischenschicht (3) angeordnet ist.

6. Verbundscheibe (10) nach einem der Ansprüche 1 bis 5, wobei die thermoplastische Zwischenschicht (3) aus mindestens einer thermoplastischen Folie ausgebildet ist und selektiv absorbierende Nanopartikel in die mindestens eine thermoplastische Folie eingelagert sind, um aus der thermoplastischen Folie die Schicht selektiv absorbierender Nanopartikel (30) auszubilden und in der mindestens einen thermoplastischen Folie bevorzugt mindestens 0,1 Gew.-% selektiv absorbierende Nanopartikel eingelagert sind.

7. Verbundscheibe (10) nach einem der Ansprüche 1 bis 6, wobei die Schicht selektiv absorbierender Nanopartikel (30) Nanopartikel basierend auf Halbleitermaterialien, bevorzugt basierend auf Silizium (Si), Zinkselenid (ZnSe) und/oder Cadmiumtellurid (CeTe), und/oder basierend auf Perowskiten, bevorzugt basierend auf halogenhaltigen Cäsium-Blei-Perowskiten, insbesondere CsPbl₃ oder CsPb(I/Br)₃, umfasst.

8. Verbundscheibe (10) nach einem der Ansprüche 1 bis 7, wobei die Schicht selektiv absorbierender Nanopartikel (30) eine Absorption im Wellenlängenbereich von 580 nm bis 700 nm, bevorzugt im Wellenlängenbereich von 590 nm bis 690 nm, aufweist.

9. Verbundscheibe (10) nach einem der Ansprüche 1 bis 8, wobei die Schicht selektiv absorbierender Nanopartikel (30) im absorbierten Wellenlängenbereich eine Absorption von mindestens 20%, bevorzugt mindestens 30%, besonders bevorzugt mindestens 40% aufweist.

10. Verbundscheibe (10) nach einem der Ansprüche 1 bis 9, wobei die elektrisch leitfähige Beschichtung (20) mindestens eine elektrische leitfähige Schicht, bevorzugt mindestens zwei elektrisch leitfähige Schichten, besonders bevorzugt mindestens drei elektrisch leitfähige Schichten umfasst, welche jeweils zwischen zwei dielektrischen Schichten oder Schichtenfolgen angeordnet sind.

11. Verbundscheibe (10) nach Anspruch 10, wobei die mindestens eine elektrische leitfähige Schicht Silber umfasst.

12. Verbundscheibe (10) nach einem der Ansprüche 1 bis 11, wobei die elektrisch leitfähige Beschichtung (20) mindestens zwei Sammelleiter aufweist über die die elektrisch leitfähige Beschichtung (20) mit einer elektrischen Spannungsquelle verbunden werden kann.

13. Verwendung der Verbundscheibe (10) nach einem der Ansprüche 1 bis 12 in Kraftfahrzeugen, bevorzugt als Windschutzscheibe, Heckscheibe, Seitenscheibe und/oder Dachscheibe, besonders bevorzugt als Windschutzscheibe eines Kraftfahrzeugs.

## Claims

1. Laminated pane (10) which has an electrically conductive coating (20), at least comprising an outer pane (1), which has an outer-side surface (I) and an interior-side surface (II), and an inner pane (2), which has an outer-side surface (III) and an interior-side surface (IV), wherein the interior-side surface (II) of the outer pane (1) and the outer-side surface (III) of the inner pane (2) are connected to one another via a thermoplastic intermediate layer (3), and wherein between the interior-side surface (II) of the outer pane (1) and the outer-side surface (III) of the inner pane (2) at least:
- the electrically conductive coating (20) and
- at least one layer of selectively absorbing nanoparticles (30) which have an absorption within the wavelength range of 580 nm to 750 nm
are arranged flat and one on top of the other.

2. Laminated pane (10) according to claim 1, wherein at least one layer of selectively absorbing nanoparticles (30) is arranged on the outer side of the electrically conductive coating (20).

3. Laminated pane (10) according to claim 1 or claim 2, wherein at least one layer of selectively absorbing nanoparticles (30) is arranged on the inner side of the electrically conductive coating (20).

4. Laminated pane (10) according to claim 2, wherein the electrically conductive coating (20) is arranged on the outer-side surface (III) of the inner pane (2), and the at least one layer of selectively absorbing nanoparticles (30) is arranged within the intermediate layer (3).

5. Laminated pane (10) according to claim 3, wherein the electrically conductive coating (20) is arranged on the interior-side surface (II) of the outer pane (1), and the at least one layer of selectively absorbing nanoparticles (30) is arranged within the intermediate layer (3).

6. Laminated pane (10) according to any of claims 1 to 5, wherein the thermoplastic intermediate layer (3) is formed from at least one thermoplastic film, and selectively absorbing nanoparticles are embedded in the at least one thermoplastic film in order to form the layer of selectively absorbing nanoparticles (30) from the thermoplastic film, and preferably at least 0.1 wt% of selectively absorbing nanoparticles are embedded in the at least one thermoplastic film.

7. Laminated pane (10) according to any of claims 1 to 6, wherein the layer of selectively absorbing nanoparticles (30) comprises nanoparticles based on semiconductor materials, preferably based on silicon (Si), zinc selenide (ZnSe) and/or cadmium telluride (CeTe), and/or based on perovskites, preferably based on halogen-containing cesium-lead perovskites, in particular CsPbl₃ or CsPb(I/Br)₃.

8. Laminated pane (10) according to any of claims 1 to 7, wherein the layer of selectively absorbing nanoparticles (30) has an absorption in the wavelength range from 580 nm to 700 nm, preferably in the wavelength range from 590 nm to 690 nm.

9. Laminated pane (10) according to any of claims 1 to 8, wherein the layer of selectively absorbing nanoparticles (30) has, in the absorbed wavelength range, an absorption of at least 20%, preferably at least 30%, particularly preferably at least 40%.

10. Laminated pane (10) according to any of claims 1 to 9, wherein the electrically conductive coating (20) comprises at least one electrically conductive layer, preferably at least two electrically conductive layers, particularly preferably at least three electrically conductive layers, each of which is arranged between two dielectric layers or layer sequences.

11. Laminated pane (10) according to claim 10, wherein the at least one electrically conductive layer comprises silver.

12. Laminated pane (10) according to any of claims 1 to 11, wherein the electrically conductive coating (20) has at least two busbars via which the electrically conductive coating (20) can be connected to an electrical voltage source.

13. Use of the laminated pane (10) according to any of claims 1 to 12 in motor vehicles, preferably as a windshield, rear window, side window and/or roof window, particularly preferably as a windshield of a motor vehicle.

## Revendications

1. Vitrage feuilleté (10) comportant un revêtement électriquement conducteur (20) comprenant au moins une vitre externe (1) comportant une surface côté externe (1) et une surface côté espace interne (II) et une vitre interne (2) comportant une surface côté externe (III) et une surface côté espace interne (IV), dans lequel la surface côté espace interne (II) de la vitre externe (1) et la surface côté externe (III) de la vitre interne (2) sont reliées l'une à l'autre par l'intermédiaire d'une couche intermédiaire (3) thermoplastique, et dans lequel, entre la surface côté espace interne (II) de la vitre externe (1) et la surface côté externe (III) de la vitre interne (2) sont disposés à plat au moins
- le revêtement électriquement conducteur (20) et
- au moins une couche de nanoparticules absorbantes sélectives (30) comportant une absorption dans la plage de longueurs d'onde allant de 580 nm à 750 nm.

2. Vitrage feuilleté (10) selon la revendication 1, dans lequel au moins une couche de nanoparticules absorbantes sélectives (30) est disposée à l'extérieur du revêtement électriquement conducteur (20).

3. Vitrage feuilleté (10) selon la revendication 1 ou 2, dans lequel au moins une couche de nanoparticules absorbantes sélectives (30) est disposée à l'intérieur du revêtement électriquement conducteur (20).

4. Vitrage feuilleté (10) selon la revendication 2, dans lequel le revêtement électriquement conducteur (20) est disposé sur la surface côté externe (III) de la vitre interne (2) et l'au moins une couche de nanoparticules absorbantes sélectives (30) est disposée à l'intérieur de la couche intermédiaire (3).

5. Vitrage feuilleté (10) selon la revendication 3, dans lequel le revêtement électriquement conducteur (20) est disposé sur la surface côté espace interne (II) de la vitre externe (1) et l'au moins une couche de nanoparticules absorbantes sélectives (30) est disposée à l'intérieur de la couche intermédiaire (3).

6. Vitrage feuilleté (10) selon l'une des revendications 1 à 5, dans lequel la couche intermédiaire (3) thermoplastique est réalisée à partir d'au moins un film thermoplastique et des nanoparticules absorbantes sélectives sont incorporées dans l'au moins un film thermoplastique afin de réaliser la couche de nanoparticules absorbantes sélectives (30) à partir du film thermoplastique et de préférence au moins 0,1 % en poids de nanoparticules absorbantes sélectives sont incorporées dans l'au moins un film thermoplastique.

7. Vitrage feuilleté (10) selon l'une des revendications 1 à 6, dans lequel la couche de nanoparticules absorbantes sélectives (30) comprend des nanoparticules à base de matériaux semi-conducteurs, de préférence à base de silicium (Si), séléniure de zinc (ZnSe) et/ou tellurure de cadmium (CeTe), et/ou à base de pérovskites, de préférence à base de pérovskites de césium et de plomb halogénées, en particulier CsPbl₃ ou CsPb(I/Br)₃.

8. Vitrage feuilleté (10) selon l'une des revendications 1 à 7, dans lequel la couche de nanoparticules absorbantes sélectives (30) présente une absorption dans la gamme de longueurs d'onde allant de 580 nm à 700 nm, de préférence dans la gamme de longueurs d'onde allant de 590 nm à 690 nm.

9. Vitrage feuilleté (10) selon l'une des revendications 1 à 8, dans lequel la couche de nanoparticules absorbantes sélectives (30) présente une absorption dans la gamme de longueurs d'onde absorbée d'au moins 20 %, de préférence d'au moins 30 %, de manière particulièrement préférée d'au moins 40 %.

10. Vitrage feuilleté (10) selon l'une des revendications 1 à 9, dans lequel le revêtement électriquement conducteur (20) comprend au moins une couche électriquement conductrice, de préférence au moins deux couches électriquement conductrices, de manière particulièrement préférée au moins trois couches électriquement conductrices, qui sont respectivement disposées entre deux couches ou successions de couches diélectriques.

11. Vitrage feuilleté (10) selon la revendication 10, dans lequel l'au moins une couche électriquement conductrice comprend de l'argent.

12. Vitrage feuilleté (10) selon l'une des revendications 1 à 11, dans lequel le revêtement électriquement conducteur (20) présente au moins deux barres omnibus par l'intermédiaire desquelles le revêtement électriquement conducteur (20) peut être connecté à une source de tension électrique.

13. Utilisation du vitrage feuilleté (10) selon l'une des revendications 1 à 12 dans des véhicules automobiles, de préférence comme pare-brise, lunette arrière, vitre latérale et/ou vitre de toit, de manière particulièrement préférée comme pare-brise d'un véhicule automobile.
